# EUROPEAN PATENT APPLICATION

(11) **EP 4 733 226 A1**
(43) Date of publication of application: **29.04.2026**
(21) Application number: 24869422.6
(22) Date of filing: 19.12.2024
(51) Int. Cl.: B65G 1/04

(54) **GOODS PICKUP MECHANISM, GOODS PICKUP APPARATUS, AND GOODS PICKUP METHOD**

(30) Priority: 14.08.2024 CN 202411118098; 14.08.2024 CN 202421972868 U
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: SHANG, Chunpeng, Beijing 100176 (CN)
(74) Representative: Gamba, Alessandro
(86) International application number: PCT/CN2024/140629
(87) International publication number: WO 2026/036613

(57) **Abstract**

Provided are a picking mechanism, device, and method. The picking mechanism includes a picking member (12) and a vibrating member (15). The picking member (12) is configured to act on the bottom of a product (300) to lift and pick the product (300). The vibrating member (15) is configured to apply vibration to the picking member (12). The picking method includes moving the picking mechanism to a target picking position based on picking information to make the picking member located below a storage chute where a target product is placed; lifting, by the picking member, the target product to make the target product to slide down; and in response to satisfying a vibration initiation condition, applying the vibration to the picking member.

## Description

This application claims priority to Chinese Patent Application No. 202411118098.0 filed Aug. 14, 2024, the disclosures of which are incorporated herein by reference in their entireties.

### TECHNICAL FIELD

The present disclosure relates to the field of logistics technology, particularly a picking mechanism, device, and method.

### BACKGROUND

With the rapid development of storage technology, intelligent warehouse systems that use intelligent handling robots to achieve automated picking and handling of goods are becoming increasingly widespread, effectively improving the storage efficiency and reducing the labor costs required for warehousing.

The related art provides a logistics system. The logistics system includes multi-layer shelves and a picking device. Each layer of the multi-layer shelves is equipped with partitions, with multiple rows of storage chutes formed on the partitions. The storage chutes are inclined from top to bottom, and the lower ends of the chutes are provided with blocking members that can prevent goods from sliding out of the storage chutes. Multiple goods can be arranged side by side in the storage chutes along their extending direction. The picking device includes a walking mechanism and a picking mechanism. The picking mechanism is equipped with a picking chute for picking the goods. The walking mechanism facilitates the horizontal and vertical movement of the picking mechanism. When picking is required, the picking device moves through the aisle between two shelves to the front side of the target product, the picking mechanism moves to the lower end of a storage chute where the target product is located, and the picking member at the upper end of the picking chute lifts the product, allowing the product to bypass the blocking member and then fall into the picking chute under the action of gravity.

Under certain circumstances, such as when there are fewer goods in a storage chute, resulting in reduced downward pressure applied to the target product, or when the friction between the goods and the bottom of the storage chute is relatively large, or when the goods are relatively light, problems may arise where the goods stagnate in the storage chute and fail to slide downward or the goods slide downward at a slower speed and lead to lower picking efficiency, affecting the normal picking process.

### SUMMARY

Embodiments of the present disclosure provide a picking mechanism, device, and method to improve the smoothness and efficiency of product picking and reduce the probability of picking failure.

A picking mechanism includes a picking member and a vibrating member. The picking member is configured to act on the bottom of a product to lift and pick the product. The vibrating member is configured to apply vibration to the picking member.

In a solution of the picking mechanism, the picking mechanism also includes a picking chute. The picking member is disposed at the upper end of the picking chute.

In a solution of the picking mechanism, the vibrating member is mounted on the picking chute or on the picking member; and/or the vibrating member includes a vibrating motor.

In a solution of the picking mechanism, the picking chute includes an inclined chute bottom plate and chute lateral plates disposed on opposite sides of the chute bottom plate, and the vibrating member is mounted on the backside of the chute bottom plate or on the outer side of the chute lateral plates.

In a solution of the picking mechanism, the picking mechanism also includes a picking frame. The picking chute is mounted on the picking frame. A damping structure is disposed between the picking frame and the picking chute.

A picking device includes a walking mechanism and the preceding picking mechanism. The walking mechanism is configured to drive the picking mechanism to move.

A picking method uses the picking device. The picking method includes moving the picking mechanism to a target picking position based on picking information to make the picking member located below a storage chute where a target product is placed; performing a picking operation: lifting, by the picking member, the target product to make the target product to slide down; and in response to satisfying a vibration initiation condition, applying the vibration to the picking member.

In a solution of the picking method, applying the vibration to the picking member includes controlling the vibrating member to act directly on the picking member; or the picking mechanism has a picking chute, the picking member is disposed at the upper end of the picking chute, and applying the vibration to the picking member includes controlling the vibrating member to act on the picking chute to transmit the vibration to the picking member.

In a solution of the picking method, the vibration initiation condition includes one of the following: The picking member contacts the target product; or no product is detected passing a preset detection position within a preset time after the picking member contacts the target product; or the picking member begins to move upward to initiate the picking operation; or the number of target products in the storage chute is less than or equal to a preset number.

In a solution of the picking method, the picking method also includes after the vibration is initiated, in response to satisfying a vibration termination condition, controlling the vibration to stop. The vibration termination condition includes one of the following: The target product is detected passing a preset detection position; or the duration of the vibration is greater than or equal to a first preset duration.

In a solution of the picking method, the picking method also includes, in response to no product being detected passing the preset detection position within the first preset duration of the vibration, issuing an abnormity alarm.

In a solution of the picking method, the picking method also includes controlling the frequency of the vibration based on the weight of the target product or pressure applied to the picking member by the target product; or in response to the vibration being initiated, controlling the vibrating member to apply an initial frequency to the picking member, and in response to no product being detected passing a preset detection position within a second preset duration of the vibration, increasing the vibration frequency of the vibrating member.

### BRIEF DESCRIPTION OF DRAWINGS

FIG. 1 is a view of part of the structure of a logistics system according to an embodiment of the present disclosure.
FIG. 2 is a side view of the structure of FIG. 1.
FIG. 3 is an enlarged view of part I of FIG. 2.
FIG. 4 is a view of the structure of a shelf according to an embodiment of the present disclosure.
FIG. 5 is an enlarged view of part J of FIG. 4.
FIG. 6 is a view of the structure of a shelf and a picking device according to an embodiment of the present disclosure.
FIG. 7 is a view of part of the structure of a picking device according to an embodiment of the present disclosure.
FIG. 8 is an enlarged view of part K of FIG. 7.
FIG. 9 is a view of the structure of a picking mechanism in a first perspective according to embodiment one of the present disclosure.
FIG. 10 is an enlarged view of part L of FIG. 9.
FIG. 11 is a view of the structure of a picking mechanism in a second perspective according to embodiment one of the present disclosure.
FIG. 12 is a view of part of the structure of a picking mechanism according to embodiment one of the present disclosure.

Reference list
100. picking device, 200. shelf, 201. vertical frame, 202. partition component, 2021. support member, 20211. support plate portion, 20212. separator plate portion, 2022. storage chute, 2023. stop member, 2024. picking notch, 2025. crossbeam, 300. product;
1. picking mechanism, 11. picking chute, 111. chute bottom plate, 112. chute lateral plate, 12. picking member, 121. picking body, 122. product stop portion, 13. temporary storage chute, 14. picking frame, 141. mounting frame, 142. support frame portion, 15. vibrating member, 16. force application assembly, 161. force application driver, 162. driven pulley, 163. driving pulley, 164. transmission belt, 17. baffle component, 171. movable baffle, 172. baffle driving member, 18. identification device, 19. mounting seat;
2. walking mechanism, 21. lifting column;
3. horizontal adjustment module, 31. horizontal adjustment guide rail, 32. horizontal adjustment slider;
4. vertical adjustment module, 41. vertical adjustment guide rail, 42. vertical adjustment slider, 43. vertical adjustment driving component;
5. temporary storage component, 51. temporary storage space;
6. lifting frame

### DETAILED DESCRIPTION

In the description of the present disclosure, unless otherwise expressly specified and limited, terms "jointed", "connected", or "fixed" are to be construed in a broad sense. For example, the term "connected" may refer to "securely connected", "detachably connected" or "integrally connected", may refer to "mechanically connected" or "electrically connected", or may refer to "connected directly", "connected indirectly through an intermediary" or "intraconnected between two components or interactional between two components". For those of ordinary skill in the art, specific meanings of the preceding terms in the present disclosure may be construed based on specific situations.

In the present disclosure, unless otherwise expressly specified and limited, when a first feature is described as "above" or "below" a second feature, the first feature and the second feature may be in direct contact or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below or underneath the second feature, or the first feature is obliquely under, below or underneath the second feature, or the first feature is simply at a lower level than the second feature.

In the description of this embodiment, the orientation or position relationships indicated by terms "above", "below", "right" and the like are based on the orientation or position relationships shown in the drawings, merely for ease of description and simplifying operation, and these relationships do not indicate or imply that the referred device or element has a specific orientation and is constructed and operated in a specific orientation, and thus they are not to be construed as limiting the present disclosure. In addition, the terms "first" and "second" are used only to distinguish between descriptions and have no special meaning.

### Embodiment one

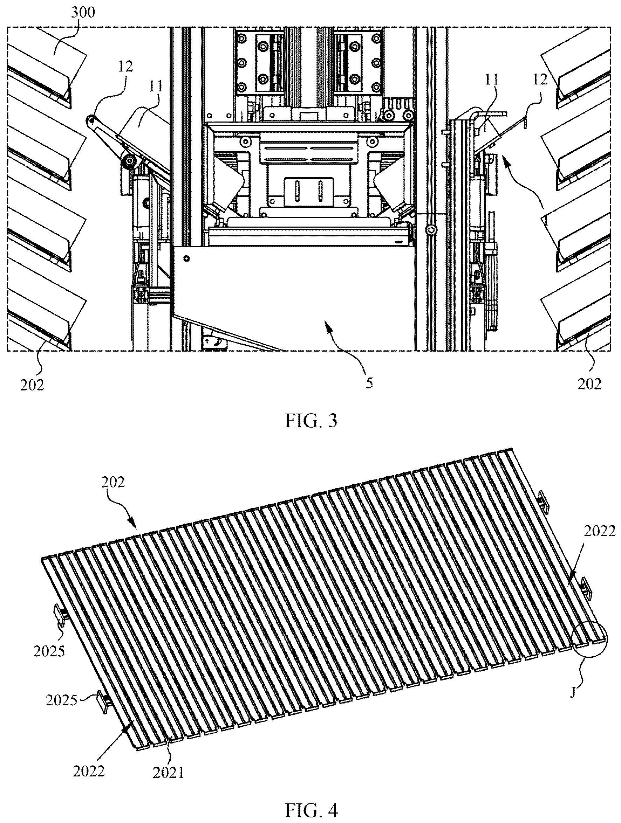

As shown in FIG. 3 to FIG. 5, this embodiment provides a logistics system that includes a shelf 200, a picking device 100, and a control system. The shelf 200 is configured to store products 300. The picking device 100 can move to the position of a target product 300 and pick the target product 300 from the shelf 200. The control system controls the operation of the picking device 100.

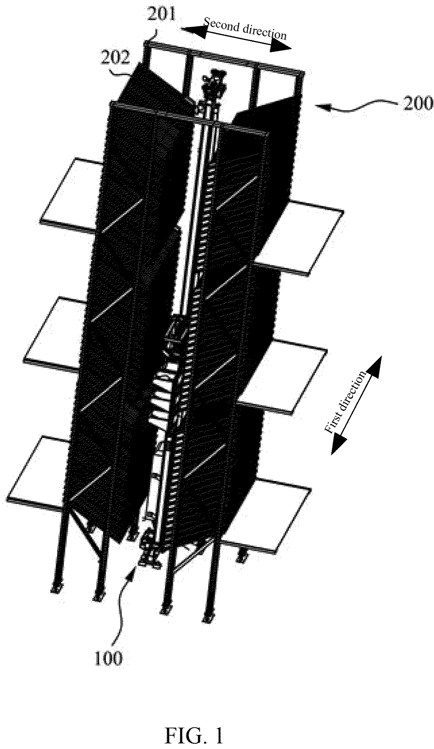

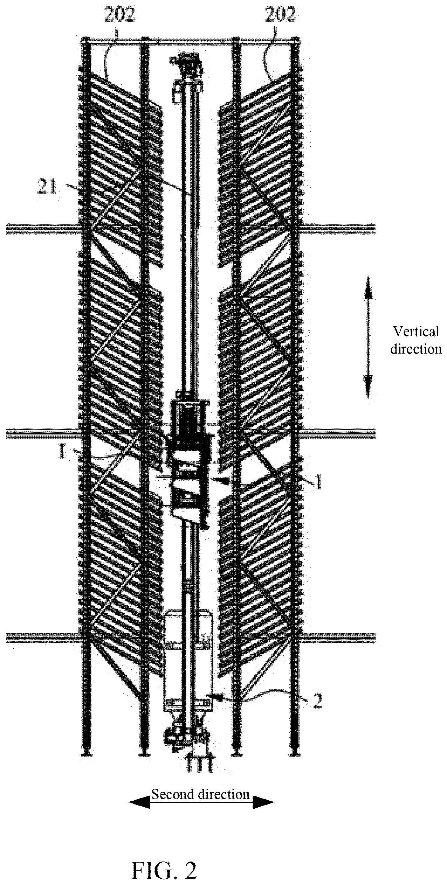

As shown in FIG. 1 to FIG. 5, the shelf 200 includes multiple partition components 202 spaced apart along the height direction. Each partition component 202 is provided with multiple storage chutes 2022 in parallel along a first direction. Each storage chute 2022 is inclined downward from the stock end to the picking end. The product 300 enters the storage chute 2022 from the stock end and slides out from the picking end. A stop member 2023 is disposed at the opening at the lower end of the storage chute 2022. The stop member 2023 can prevent the product 300 inside the storage chute 2022 from sliding out of the storage chute 2022.

The shelf 200 includes two vertical frames 201 spaced apart along the first direction. A storage section is formed between the two adjacent vertical frames 201. Storage sections are divided by multiple partition components 202 along the height direction. The partition components 202 between two adjacent storage sections correspond one to one in the height direction. The two ends of each partition component 202 along the first direction are connected to the two vertical frames 201 one to one.

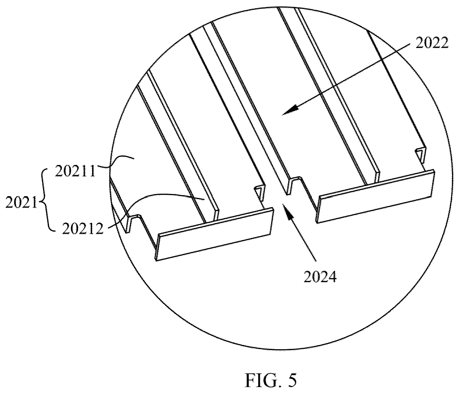

As shown in FIG. 4 and FIG. 5, to improve the versatility of the shelf 200, each partition component 202 includes support members 2021 arranged in parallel along the first direction and crossbeams 2025 extending along the first direction. The two ends of each crossbeam 2025 are connected to the two vertical frames 201 one to one. The bottoms of all support members 2021 are detachably connected to the crossbeams 2025. Each support member 2021 includes a support plate portion 20211 and a separator plate portion 20212 connected at an angle to each other. A storage chute 2022 is formed between the separator plate portions 20212 of two adjacent support members 2021. The support plate portion 20211 forms the bottom of the storage chute 2022. Thus, it is feasible to adjust the width of the storage chute 2022 by adjusting the distance between the two adjacent support members 2021, allowing the shelf 200 to accommodate different types of products 300. At least two crossbeams 2025 are spaced along the extension direction of the support members 2021 to ensure the stability and reliability of the support members 2021.

Multiple shelves 200 are spaced apart along a second direction. A passage is formed between two adjacent shelves 200 and configured for the picking mechanism 100 to move through. The second direction is perpendicular to the first direction.

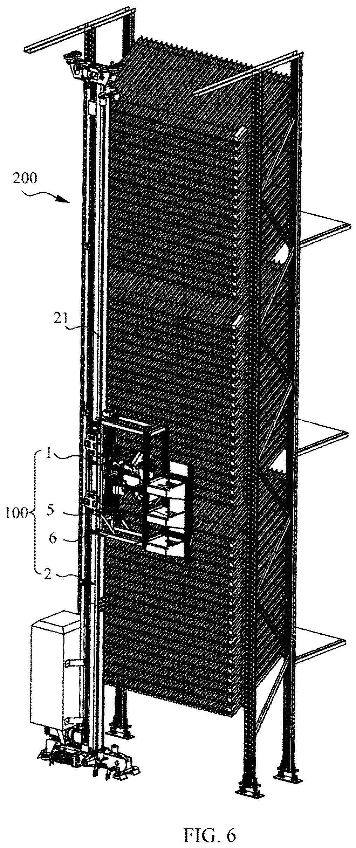

As shown in FIG. 5 and FIG. 6, the picking device 100 includes a walking mechanism 2 and a picking mechanism 1. The walking mechanism 2 enables the picking device 100 to move on the ground. The walking mechanism 2 can move along the first direction, allowing the picking mechanism 1 to align with any column of storage chutes 2022. Additionally, the walking mechanism 2 can drive the picking mechanism 1 to move vertically, enabling the picking mechanism 1 to align with any row of picking chutes 11. In this manner, the picking mechanism 1 can pick a product 300 from any picking chute 11 on the shelf 200.

The structure of the walking mechanism 2 may be configured with reference to the related art as the walking mechanism 2. The structure and walking mode of the walking mechanism 2 are not limited by this embodiment.

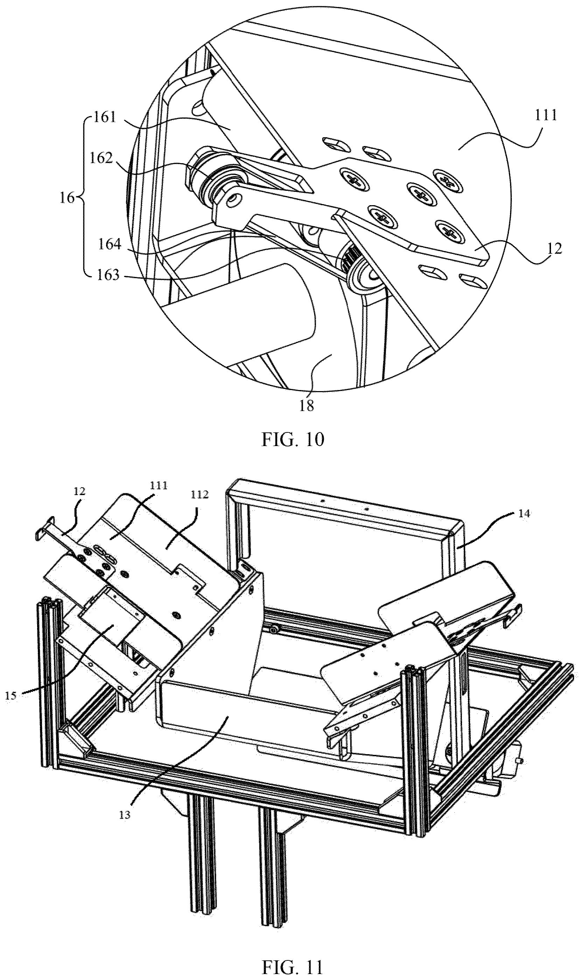

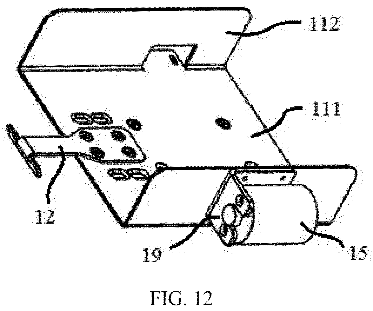

As shown in FIG. 5 to FIG. 12, the picking mechanism 1 includes a picking member 12. The picking member 12 is configured to act on the bottom of a product 300 to lift and pick the product 300. The bottom of the storage chute 2022 is provided with a picking notch 2024. The picking notch 2024 is connected to the opening at the lower end of the storage chute 2022. When the picking device 100 performs picking, the picking member 12 is moved to the position under the corresponding storage chute 2022 and then is moved upward through the picking notch 2024 to abut the bottom of the product 300 in the storage chute 2022 to raise the lower end of the product 300, allowing the product 300 to pass over the stop member 2023 and slide into the picking mechanism 1.

That is, in this embodiment, the stop member 2023 is fixedly disposed at the lower end of the storage chute 2022 and is positioned above the bottom of the storage chute 2022. When the product 300 is not lifted by the picking member 12, the stop member 2023 prevents the product 300 from sliding down out of the storage chute 2022. This arrangement simplifies the structure of the stop member 2023, thereby reducing the overall costs of the shelf 200 and the storage system. The lower end of each separator plate portion 20212 is connected to a stop member 2023. The two sides of the stop member 2023 along the first direction extend beyond the separator plate portion 20212. This simplifies the configuration of the stop member 2023.

The structure configuration of the partition component 202 in the preceding shelf 200 is illustrative. Any shelf 200 having inclined storage chutes 2022 that allow for product storage and inclined dropping for picking can also be applied in the present disclosure. The structure of the shelf 200 is not limited in the present disclosure.

To improve the smoothness of picking, in this embodiment, the picking mechanism 1 also includes a vibrating member 15. The vibrating member 15 is configured to apply vibration to the picking member 12.

The picking mechanism 1, picking device 100, and logistics system of embodiments of the present disclosure have a vibrating member 15. When the picking mechanism 1 picks the product 300 from the storage chute 2022, the vibrating member 15 can drive the picking member 12 to vibrate, thereby reducing the friction between the product 300 and the picking member 12, minimizing jamming between the product 300, the picking member 12, and the storage chute 2022, promoting the downward movement of the product 300 into the picking mechanism 1 under the force of gravity, enhancing the smoothness of the product 300 sliding from the storage chute 2022 into the picking mechanism 1, reducing the probability of picking failure, improving the reliability of picking, enhancing the picking efficiency, and boosting the operational efficiency of the logistics system.

In this embodiment, to improve the reliability and smoothness of product picking, the picking mechanism 1 also includes a picking chute 11. The picking chute 11 is inclined downward in the direction away from the picking member 12. The picking member 12 is positioned at the upper end of the picking chute 11. When the picking member 12 performs picking, the picking member 12 extends beyond the picking chute 11. By providing the picking chute 11 and placing the picking member 12 at the upper end of the picking chute 11, it is possible that after the picking member 12 lifts the product 300, the product 300 falls along the picking member 12 into the picking chute 11 and then falls along the picking chute 11 into a specific position in the picking mechanism 1, better guiding the product 300 into the picking mechanism 1, reducing the risk of dropping of the product 300 during the picking process, and improving the safety of the picking operation.

To better achieve temporary storage of the product, the picking device 100 also includes a temporary storage component 5. The temporary storage component 5 has a temporary storage space 51. The lower end of the picking chute 11 is connected to the temporary storage space 51 so that the product 300 falling into the picking chute 11 can slide into the temporary storage space 51, allowing temporary storage of the product 300 in the picking device 100.

In another embodiment, the picking mechanism 1 may have no picking chute 11 but have a temporary storage component 5 with a temporary storage space 51. The lower end of the picking member 12 is connected to the temporary storage space 51 so that the product falling from the picking member 12 can directly fall into the temporary storage space 51 for temporary storage.

In another embodiment, the picking member 12 may be separate from the picking chute 11. For example, the picking mechanism 1 includes a picking frame 14. The picking member 12 and the picking chute 11 are mounted on the picking frame 14. The upper end of the picking member 12 extends beyond the upper end of the picking chute 11 to guide the product picked by the picking member 12 into the picking chute 11.

In this embodiment, the vibrating member 15 is mounted in the picking chute 11, ensuring the mounting space for the vibrating member 15 and the structural strength at the mounting position and reducing the impact of the vibrating member 15 on the size of the picking member 12. In another embodiment, the vibrating member 15 may be mounted on the picking member 12. In yet another embodiment, the vibrating member 15 may be mounted on the picking frame 14 and adjacent to the picking chute 11.

The picking chute 11 includes an inclined chute bottom plate 111 and two chute lateral plates 112 connected to opposite sides of the chute bottom plate 111. The two chute lateral plates 112 protrude upward from the chute bottom plate 111. The vibrating member 15 is mounted on the backside of the chute bottom plate 111 or on the outer side of the chute lateral plates 112. This arrangement helps simplify the mounting structure of the vibrating member 15 and reduce the mounting difficulty of the vibrating member 15.

To improve the mounting convenience of the vibrating member 15, a mounting seat 19 is disposed on the outer side of the picking chute 11, and the vibrating member 15 is mounted on the mounting seat 19. The mounting seat 19 is detachably connected to the picking chute 11, and/or the vibrating member 15 is detachably connected to the mounting seat 19.

The vibrating member 15 is a vibration motor. The structure and vibration principle of the vibration motor may be configured according to the related art. The structure and type of the vibration motor are not limited by this embodiment. The size and model of the vibration motor may be selected adaptively based on the size and type of the product 300.

In this embodiment, the lower end of the picking member 12 is connected to the chute bottom plate 111, and the upper end of the picking member 12 extends upward beyond the picking chute 11. The extension direction of the picking member 12 is the same as the extension direction of the picking chute 11. That is, in this embodiment, the upper end of the picking member 12 always extends beyond the picking chute 11. In other embodiments, the picking member 12 may be movably mounted on the chute bottom plate 111. When not required for picking, the picking member 12 is located inside the picking chute 11 or below the picking chute 11.

The picking member 12 includes a picking body 121 and a product stop portion 122. The picking body 121 extends obliquely from top to bottom. One end of the product stop portion 122 is connected to the upper end of the picking body 121. The other end of the product stop portion 122 extends downward. With this arrangement, when the picking member 12 picks the product 300, the picking body 121 contacts the bottom of the product 300, and the product stop portion 122 abuts the product 300 located behind the to-be-picked product 300 to restrict the rear product 300 from sliding down and causing jam, improving the safety and reliability of the picking process. Additionally, the product stop portion 122 enhances the structural strength and rigidity of the upper end of the picking member 12, reducing the likelihood of deformation or damage of the picking member 12.

At least part of the width of the product stop portion 122 is greater than the width of the upper end of the picking body 121, increasing the contact area between the product stop portion 122 and the product 300, thereby enhancing the blocking effect of the product stop portion 122 on the product 300.

In this embodiment, the picking device 100 also includes a lifting frame 6 connected to the walking mechanism 2. The picking mechanism 1 and the temporary storage component 5 are both mounted on the lifting frame 6, allowing the lifting of the lifting frame 6 to drive the picking mechanism 1 and the temporary storage component 5 to move up or down synchronously. In this embodiment, the temporary storage component 5 is mounted on the side of the lifting frame 6 facing away from the lifting column 21 of the walking mechanism 2. The lifting frame 6 is positioned between the lifting column 21 and the temporary storage component 5, enhancing the structural layout rationality of the picking device 100, reducing the size of the picking device 100 in the second direction, decreasing the aisle width required between two adjacent shelves 200, and increasing the storage density.

Two picking chutes 11 are provided. The two picking chutes 11 are opposite to each other and spaced from each other. The two picking chutes 11 extend obliquely downward and toward each other. The picking mechanism 1 includes a temporary storage chute 13 located between the lower ends of the two picking chutes 11. The temporary storage chute 13 extends obliquely downward in a direction away from the picking chutes 11. The upper end of the temporary storage chute 13 is connected to the lower ends of the two picking chutes 11. The lower end of the temporary storage chute 13 can be connected to the temporary storage space 51. This arrangement improves the flexibility of positioning the temporary storage component 5 and enhances the overall structural compactness of the picking mechanism 1 and the picking device 100. Additionally, the use of two picking chutes 11 enables the picking device 100 to pick products 300 from shelves 200 on both sides, thereby improving the picking flexibility.

The two picking chutes 11 extend obliquely downward along the second direction, and the temporary storage chute 13 extends obliquely downward along the first direction and toward the temporary storage component 5.

In other embodiments, no temporary storage chute 13 is provided, but a temporary storage space 51 is formed between the lower ends of the two picking chutes 11.

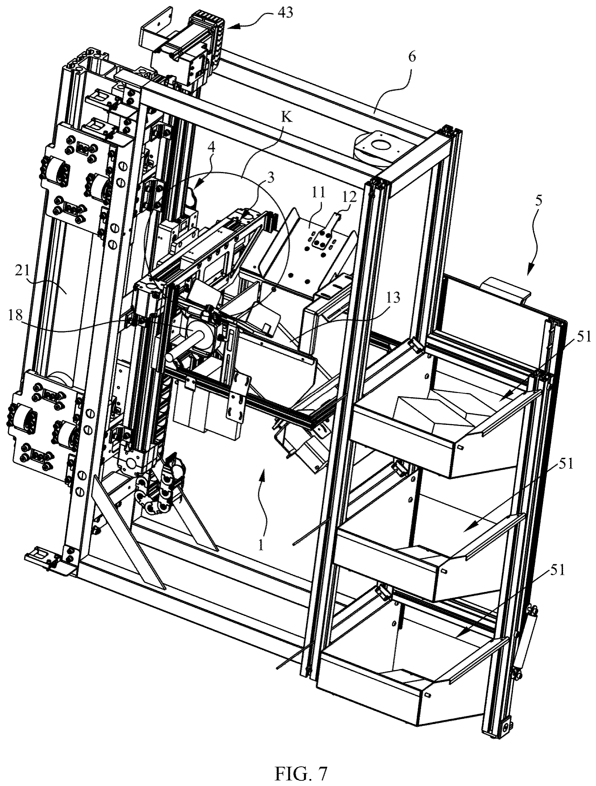

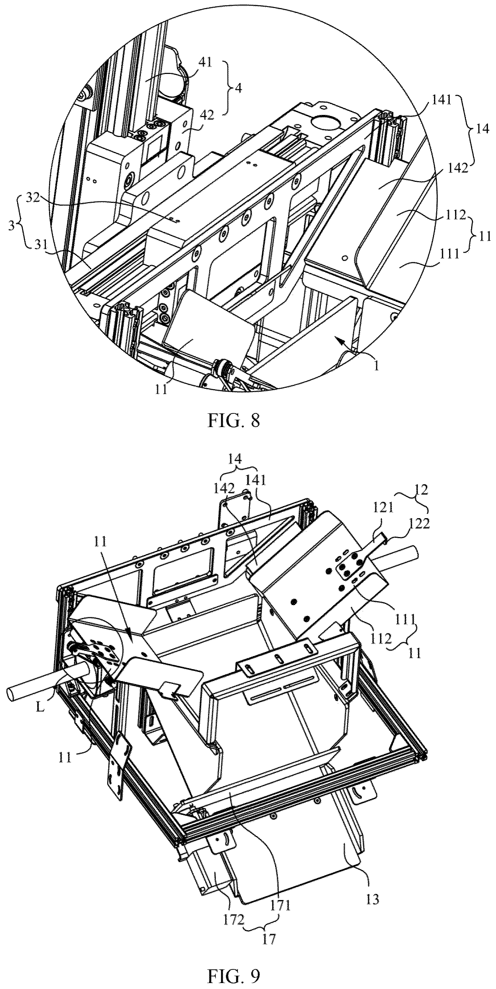

As shown in FIG. 7 and FIG. 8, in this embodiment, the temporary storage component 5 includes at least two temporary storage spaces 51 spaced in the vertical direction. The picking device 100 also includes a vertical adjustment module 4. The vertical adjustment module 4 drives the picking mechanism 1 to move vertically relative to the walking mechanism 2, thereby adjusting the position of the lower end of the temporary storage chute 13, allowing the lower end of the temporary storage chute 13 to align with any temporary storage space 51, and enabling the storage of the product 300 in any temporary storage space 51. This arrangement improves the storage capacity for products 300, thereby enhancing the picking efficiency of the picking device 100. Moreover, the vertical adjustment module 4 can drive the picking mechanism 1 to move when the picking member 12 moves upward to lift the product 300, thereby reducing the driving costs and the control complexity. The picking mechanism 1 is connected to the lifting frame 6 by the vertical adjustment module 4 so that the vertical adjustment module 4 can drive the picking mechanism 1 to move vertically relative to the lifting frame 6.

The picking device 100 also includes a horizontal adjustment module 3. The horizontal adjustment module 3 is connected between the vertical adjustment module 4 and the picking mechanism 1. The horizontal adjustment module 3 drives the picking mechanism 1 to move along the second direction, allowing the picking member 12 to move towards or away from the shelf 200. The horizontal adjustment module 3 allows for fine-tuning the positions of the picking member 12 and the shelf 200 in the second direction without moving the walking mechanism 2. This ensures that the upper end of the picking member 12 can align with the picking notch 2024 and can pass upward through the picking notch 2024. This prevents the picking member 12 from being too far from the shelf 200 and from making it difficult for the picking member 12 to effectively pick the product 300 and also prevents the picking member 12 from being too close to the shelf 200 and from making the upper end of the picking member 12 collide with the shelf 200, thereby ensuring the safety and reliability of the picking process.

The vertical adjustment module 4 includes a vertical adjustment driving component 43 and a vertical guiding component. The vertical guiding component consists of a vertical adjustment guide rail 41 mounted on the lifting frame 6 and a vertical adjustment slider 42 slidable along the vertical adjustment guide rail 41. The vertical adjustment driving component 43 drives the vertical adjustment slider 42 to slide along the vertical direction. The horizontal adjustment module 3 includes a horizontal adjustment driving component and a horizontal guiding component. The horizontal guiding component consists of a horizontal adjustment guide rail 31 extending along the second direction and a horizontal adjustment slider 32 slidable along the horizontal adjustment guide rail 31. The horizontal adjustment guide rail 31 is connected to the vertical adjustment slider 42. The horizontal adjustment slider 32 is connected to the picking frame 14 of the picking mechanism 1. The horizontal adjustment component drives the horizontal adjustment slider 32 to slide along the horizontal adjustment guide rail 31.

The structures of the vertical adjustment module 4 and the horizontal adjustment module 3 may be configured according to the related art. This is not described here.

In other embodiments, it is feasible that no horizontal adjustment module 3 is provided, and only a vertical adjustment module 4 and a temporary storage component 5 having multiple temporary storage spaces 51 are provided. In another embodiment, it is feasible that no vertical adjustment module 4 is provided, and only a horizontal adjustment module 3 is provided to achieve precise alignment between the picking member 12 and the target storage chute 2022. With this arrangement, it is feasible that only one temporary storage space 51 is provided; or multiple temporary storage spaces 51 are provided and the temporary storage component 5 is fixed relative to the lifting column 21.

To adjust the position of the picking member, the picking device 100 also includes an identification device 18. An electronic tag code is provided at the front end of each stop member 2023 on the shelf 200. The electronic tag code contains the position coordinates of the corresponding storage chute 2022 and information about the stored product 300. The identification device 18 is configured to scan and identify the electronic tag code to confirm and verify the position coordinates of the storage chute 2022. Based on the information scanned and acquired by the identification device 18, the control system controls the vertical adjustment module 4 and/or the horizontal adjustment module 3 to precisely position the picking member 12, thereby ensuring reliable picking. The identification device 18 may be a barcode scanner, a camera capable of identifying the electronic tag code.

As shown in FIG. 9 to FIG. 12, to enhance the arrangement convenience of the temporary storage chute 13 and the picking chute 11, in this embodiment, the picking chute 11 also includes a picking frame 14. The picking frame 14 is mounted on the walking mechanism 2. The picking chute 11 is mounted on the picking frame 14. The picking frame 14 is detachably mounted on the horizontal adjustment slider 32. The picking frame 14 includes a mounting frame 141 and two support frame portions 142 connected to opposite sides of the mounting frame 141. The mounting frame 141 is connected to the horizontal adjustment slider 32. The two picking chutes 11 are mounted on the two support frame portions 142 one to one. The temporary storage chute 13 is positioned between two mounting frames 141. The opposite upper ends of the temporary storage chute 13 are connected to the two support frame portions 142.

An elastic damping structure is disposed between the support frame portion 142 and the bottom of the picking chute 11. This arrangement reduces or mitigates the transmission of vibration from the picking chute 11 to the support frame portion 142, minimizing the overall vibration of the picking mechanism 1 while allowing the picking member 12 to vibrate, thereby enhancing the operational reliability and safety of the picking device 100 and extending the overall service life of the picking device 100. The elastic damping structure is an elastic pad covering the upper side of the support frame portion 142 or the lower side of the chute bottom plate 111 or may be multiple elastic damping blocks placed between the support frame portion 142 and the chute bottom plate 111.

In some embodiments, the picking mechanism 1 also includes a force application assembly 16. The force application assembly 16 includes a force application driver 161 and a force application member rotatably sleeved on the upper end of the picking member 12. The force application member can contact the bottom of the product 300. The force application driver 161 drives the force application member to rotate to make the force application member move relative to the product 300 to apply a force to the product 300 toward the interior of the picking chute 11. The force application assembly 16 can drive the product 300 on the picking member 12 to move toward the picking chute 11, enhancing the smoothness and reliability of the picking process.

The force application driver 161 includes a force application motor. The force application assembly 16 also includes a driving pulley 163 rotatably sleeved on the motor shaft of the force application motor, a driven pulley 162 rotatably mounted at the upper end of the picking member 12, and a transmission belt 164 wound around the driving pulley 163 and the driven pulley 162. The driving pulley 163, the force application motor, and part of the transmission belt 164 are located below the picking chute 11. The part of the transmission belt 164 sleeved on the driven pulley 162 forms the force application member. In other embodiments, the force application member may be a roller or wheel. The force application driver 161 drives the roller or wheel to rotate, thereby through friction between the force application member and the bottom of the product 300, applying friction toward the picking chute 11.

To detect whether a product 300 passes through the picking chute 11 and thereby determine whether the picking is successful, in this embodiment, a detection sensor is disposed on the picking chute 11. The detection sensor and the vibrating member 15 are both communicatively connected to the picking controller. The detection sensor facilitates control of the picking process.

In this embodiment, the detection sensor is mounted on the outer side of a chute lateral plate 112. A detection opening is disposed on the chute lateral plate 112. The detection end of the sensor is aligned with the detection opening to detect, via the detection opening, whether a product 300 passes through the picking chute 11. The detection sensor is a photoelectric sensor to achieve non-contact detection with high accuracy.

The temporary storage chute 13 includes a guiding bottom plate portion and two lateral baffle portions connected to opposite sides of the guiding bottom plate portion. The guiding bottom plate portion and the two lateral baffle portions form the temporary storage chute 13. The two lateral baffle portions are connected to the two support frame portions 142 one to one.

The picking mechanism 1 also includes a baffle component 17. The baffle component 17 includes a movable baffle 171 and a baffle driving member 172. The baffle driving member 172 drives the movable baffle 171 to switch between a blocking state and a bypass state. When in the blocking state, the movable baffle 171 spans across the temporary storage chute 13 and is positioned higher than the bottom of the temporary storage chute 13, thereby preventing the product 300 in the temporary storage chute 13 from moving toward the temporary storage space 51. This arrangement can prevent the product 300 from sliding out of the temporary storage chute 13 and falling when the temporary storage space 51 is full or when the temporary storage chute 13 does not align properly with the temporary storage space 51, thus improving the safety of picking.

### Embodiment two

This embodiment provides a picking method to improve the picking efficiency and the picking success rate, thereby enhancing the logistics efficiency.

The picking method of this embodiment includes the following:
The picking mechanism is moved to a target picking position based on picking information to make the picking member 12 located below a storage chute 2022 where a target product is placed.

This solution is based on the principle of using the picking member 12 to lift the product 300, allowing the product 300 to slide past the blocking member before being picked. When the picking member 12 is positioned below the storage chute 2022, the term "under" is in a broad sense, that is, may be obliquely under or directly under as long as the picking member 12 can move upwards or extend to contact the target product 300.

A picking operation is performed: The picking member 12 lifts the target product 300 to make the target product 300 to slide down.

In response to satisfying a vibration initiation condition, the vibration is applied to the picking member 12.

The vibration applied to the picking member 12 is intended to make the picking member 12 contact the target product 300 and lift the target product 300 so that when the product 300 slides, the picking member 12 is in a vibrating state, thereby helping the target product 300 slide off. The vibration initiation time may be any point before the picking is completed as long as the vibration can help in lifting the product to make the target product 300 slide. The vibration application step is not the final step of this method.

The picking method of this embodiment includes, in response to satisfying the vibration initiation condition, applying vibration to the picking member 12. When the picking member 12 picks the product 300 from the storage chute 2022, the vibrating member 15 can drive the picking member 12 to vibrate, thereby reducing the friction between the product 300 and the picking member 12, minimizing jamming between the product 300, the picking member 12, and the storage chute 2022, promoting the downward movement of the product 300 into the picking mechanism 1 under the force of gravity, enhancing the smoothness of the product 300 sliding from the storage chute 2022 into the picking mechanism 1, reducing the probability of picking failure, improving the reliability of picking, enhancing the picking efficiency, and boosting the operational efficiency of the logistics system.

The understanding of the vibration initiation condition should be broad and unrestricted, such as location, instructions, machine self-check passing, operability, timing, and normal communication. For location, a possible scenario is when the picking member 12 reaches the picking position (that is, below the product), the vibration initiation condition is satisfied. For machine self-check, the vibration initiation condition is that the device passes the self-check when started. For normal communication, the vibration initiation condition is that the device is required to communicate with the upstream system, and only when the communication is normal can the device operate. For instructions, the vibration initiation condition is that the control system issues a vibration instruction in a direct control scenario. It is to be noted that various conditions may be considered vibration initiation conditions either separately or in combination. That is, a single condition serves as the vibration initiation condition, or multiple conditions constitute the vibration initiation condition.

In this embodiment, for the structural arrangement of the shelf 200 and the picking device 100, see the structure in embodiment one. This is not limited by this embodiment.

In this embodiment, applying vibration to the picking member 12 includes controlling the vibrating member 15 to act on the upper end of the picking chute 11 so that the vibration is transmitted to the picking member 12. This allows vibration to be applied to the picking chute 11, facilitating the mounting of the vibrating member 15, simplifying the structure of the picking member 12, and avoiding interference between the picking member 12 and the storage chute 2022 due to the oversize of the picking member 12.

In other embodiments, applying vibration to the picking member 12 may also include controlling the vibrating member 15 to directly act on the picking member 12. This arrangement ensures that vibration acts on the picking member 12 while reducing the range of spreading of vibration to other positions.

In this embodiment, the vibration initiation condition includes that the picking member 12 starts to move upward to initiate the picking operation. When the picking member 12 moves directly below the storage chute 11 where the target product 300 is located and begins to move upward, the vibrating member 15 starts vibrating. This arrangement avoids the need to detect the relative position between the picking member 12 and the vibrating member 15, simplifies the control logic, and reduces the control difficulty.

In this embodiment, moving the picking mechanism 1 to the target picking position includes the following:
The position information of the target storage chute 2022 where the target product 300 is located is acquired based on picking information.

The walking mechanism 2 is controlled based on the position information to move along the ground to the front side of the target storage chute 2022.

The picking mechanism 1 is controlled to lift such that the picking member 12 is directly below the target storage chute 2022.

The identification device 18 scans and identifies the electronic tag information at the front end of the target storage chute 2022, and the verification position coordinates of the target storage chute 2022 are acquired.

Based on the verification position coordinates, the horizontal adjustment module 3 and/or the vertical adjustment module 4 are controlled to move such that the picking member 12 is directly below the picking notch 2024 of the target storage chute 2022.

The picking operation includes controlling the picking mechanism 1 to rise such that the picking member 12 moves upward through the picking notch 2024 and abuts the product 300 until the picking member 12 lifts the lower end of the product 300 by a preset height.

In this embodiment, the picking method also includes, after the vibration is initiated, in response to satisfying a vibration termination condition, controlling the vibration to stop. The vibration termination condition includes one of the following: the target product 300 is detected passing a preset detection position; or the duration of the vibration is greater than or equal to a first preset duration.

By setting the vibration termination condition, it is possible to timely stop the application of vibration, thus avoiding structural damage caused by prolonged vibration of the picking member 12 or the picking mechanism 1 and improving the operational safety and reliability of the picking device 100. When the target product 300 is detected passing through the preset detection position, it is indicated that the picking has been successfully performed, and vibration is unnecessary. If the vibration duration is determined to be greater than or equal to the first preset duration, the vibrating member 15 can be prevented from continuing ineffective vibration after a failed picking attempt, thereby reducing the operating costs of the picking mechanism 1 and the picking device 100.

In this embodiment, the preset detection position is at the picking chute 11. In other embodiments, the preset detection position may be at the temporary storage chute 13.

The first preset duration is between 5s and 40s, for example, 10s, 15s, 20s, 25s, 30s, or 35s. The value of the first preset duration may be set based on the type, weight, and required picking efficiency of the product 300. For example, the average time for the product 300 to fall into the picking chute 11 when the vibrating member 15 is applied may be acquired through testing. A first preset duration greater than the average time is determined.

The picking method also includes that if no product 300 is detected passing through the preset detection position within the first preset duration of vibration, an abnormity alarm is issued.

That is, if no product 300 has passed through the preset detection position after vibration persists for the first preset duration, the picking operation is determined to fail, and the probability of successful picking by continuing the vibration is low. This situation may be caused by a malfunction of the vibrator 15, a blockage in the storage chute 2022, or other abnormal conditions. Therefore, when the picking operation fails, the system controls to issue an abnormity alarm, facilitating troubleshooting by the operators and ensuring the smoothness of the next picking operation.

### Embodiment three

This embodiment provides a picking method. The picking method of this embodiment is essentially the same as the picking method of embodiment two except for slight differences. What is the same as embodiment two is not described in this embodiment.

In this embodiment, the vibration initiation condition is that the picking member 12 contacts the target product 300. In other words, in this embodiment, the vibration is initiated when the picking member 12 contacts the target product 300.

It can be determined whether the picking member 12 contacts the product 300 by identifying the position of the picking member 12 or by reading the detected value of a pressure sensor disposed at the upper end of the picking member 12. In other embodiments, it is feasible to use other methods to determine whether the picking member 12 contacts the product 300.

### Embodiment four

This embodiment provides a picking method. The picking method of this embodiment is essentially the same as the picking method of embodiment two except for slight differences. What is the same as embodiment two is not described in this embodiment.

In this embodiment, the picking method includes determining that the vibration initiation condition is satisfied when no product 300 is detected passing a preset detection position within a preset time after the picking member 12 contacts the target product.

In this embodiment, the preset detection position is located at the picking chute 11. In other embodiments, the preset detection position may also be located at the temporary storage chute 13.

In this arrangement, a detection sensor is required at the preset detection position to detect whether the product 300 passes through the preset detection position.

In other words, this arrangement can avoid frequent initiation of the vibrating member15 and ensure initiation at the time of failed picking or slow picking, preventing a short service life caused by prolonged vibration of the picking chute 11 and the picking member 12.

The preset time is 2s to 20s, for example, 3s to 10s.

### Embodiment five

This embodiment provides a picking method. The picking method of this embodiment is essentially the same as the picking method of embodiment two except for slight differences. What is the same as embodiment two is not described in this embodiment.

In this embodiment, the picking method includes determining that the vibration initiation condition is satisfied when the number of target products in the storage chute 2022 where the target product 300 is located is less than or equal to a preset number and the picking member 12 contacts the target product 300.

In the picking process, if the number of products in the storage chute 2022 is small, the pressure applied to the frontmost product 300 by other products 300 decreases; as a result, the force acting on the product 300 in the direction toward the picking chute 11 is reduced, and a picking failure is prone to occur. Therefore, in this embodiment, when the number of products in the storage chute 2022 is small and the picking member 12 contacts with the target product 300, vibration is applied to the picking member 12 to ensure that the product 300 moves smoothly through the picking member 12 and into the picking chute 11, avoiding frequent initiation of the vibrating member 15.

The preset number is one to four.

### Embodiment six

This embodiment provides a picking method. The picking method of this embodiment is based on the picking method of embodiment two except for slight differences. What is the same as embodiment two is not described in this embodiment.

In this embodiment, the picking method also includes controlling the vibration frequency based on the weight of the target product 300 or the pressure applied to the picking member 12 by the target product 300.

For different types and sizes of products 300, the gravity and frictional forces acting on the products 300 as they move from the storage chute 2022 to the picking chute 11 are different. Therefore, by controlling the vibration frequency based on the weight of the target product 300 or the pressure applied by the target product 300 to the picking member 12, the method can avoid that a low vibration frequency of the target product 300 results in a weak guiding effect on the product 300 to slide downward and avoids that a high vibration frequency causes vibration to spread widely to other locations or causes the product 300 to be shaken out of the picking chute 11 and fall. This ensures smooth picking while improving the safety and reliability of the picking process. Additionally, this method enhances the versatility of the picking device 100 in picking different types of products 300.

The vibration frequency corresponding to the product 300 may be acquired through testing. This embodiment does not limit the vibration frequency corresponding to each type of product 300.

In this embodiment, multiple vibration levels can be set. The multiple vibration levels correspond to different vibration frequencies and products 300 having different weights, simplifying adjustment and control of vibration.

### Embodiment seven

This embodiment provides a picking method. The picking method of this embodiment is based on the picking method of embodiment two. What is the same as embodiment two is not described in this embodiment.

In this embodiment, the picking method includes, when vibration is initiated, controlling the vibrating member 15 to apply vibration at an initial frequency to the picking member 12; and increasing the vibration frequency of the vibrating member 15 if no product 300 is detected passing the preset detection position within the second preset duration of the vibration.

That is, in this embodiment, if the vibration applied at the initial frequency still results in an unsuccessful picking, the vibration frequency is increased to enhance the effect of promoting the sliding of the product 300. This can help achieve successful picking while reducing the picking costs and minimizing the probability of vibration spreading to other positions.

The control system is preset with multiple frequency levels, with the initial frequency being the lowest frequency level. When vibration is applied at a lower frequency level and the picking fails, the vibration frequency is adjusted to the adjacent higher frequency level, thus facilitating easier adjustment.

## Claims

1. A picking mechanism, comprising a picking member (12) and a vibrating member (15), wherein the picking member (12) is configured to act on a bottom of a product (300) to lift and pick the product (300), and the vibrating member (15) is configured to apply vibration to the picking member (12).

2. The picking mechanism of claim 1, further comprising a picking chute (11), wherein the picking member (12) is disposed at an upper end of the picking chute (11).

3. The picking mechanism of claim 2, wherein the picking mechanism satisfies at least one of the following:
the vibrating member (15) is mounted on the picking chute (11) or on the picking member (12);
the vibrating member (15) comprises a vibrating motor.

4. The picking mechanism of claim 3, wherein the picking chute (11) comprises an inclined chute bottom plate (111) and chute lateral plates (112) disposed on opposite sides of the chute bottom plate (111), and the vibrating member (15) is mounted on a backside of the chute bottom plate (111) or on an outer side of the chute lateral plates (112).

5. The picking mechanism of any one of claims 2 to 4, further comprising a picking frame (14), wherein the picking chute (11) is mounted on the picking frame (14), and a damping structure is disposed between the picking frame (14) and the picking chute (11).

6. A picking device, comprising a walking mechanism (2) and the picking mechanism of any one of claims 1 to 5, wherein the walking mechanism (2) is configured to drive the picking mechanism to move.

7. A picking method, the method using the picking device of claim 6 and comprising:
moving the picking mechanism of the picking device to a target picking position based on picking information to make the picking member of the picking mechanism located below a storage chute where a target product is placed;
lifting, by the picking member, the target product to make the target product to slide down; and
in response to satisfying a vibration initiation condition, applying the vibration to the picking member.

8. The picking method of claim 7, wherein applying the vibration to the picking member comprises controlling the vibrating member of the picking mechanism to act directly on the picking member; or
the picking mechanism has a picking chute, the picking member is disposed at an upper end of the picking chute, and applying the vibration to the picking member comprises controlling the vibrating member of the picking mechanism to act on the picking chute to transmit the vibration to the picking member.

9. The picking method of claim 7, wherein the vibration initiation condition comprises one of following:
the picking member contacts the target product;
no target product is detected passing a preset detection position within a preset time after the picking member contacts the target product;
the picking member begins to move upward to initiate the picking operation;
a number of target products in the storage chute is less than or equal to a preset number.

10. The picking method of any one of claims 7 to 9, further comprising: after the vibration is initiated, in response to satisfying a vibration termination condition, controlling the vibration to stop, wherein
the vibration termination condition comprises one of the following: the target product is detected passing a preset detection position; or duration of the vibration is greater than or equal to a first preset duration.

11. The picking method of claim 10, further comprising: in response to no product being detected passing the preset detection position within the first preset duration of the vibration, issuing an abnormity alarm.

12. The picking method of any one of claims 7 to 9, further comprising: controlling a frequency of the vibration based on a weight of the target product or pressure applied to the picking member by the target product; or
in response to the vibration being initiated, controlling the vibrating member to apply an initial frequency to the picking member, and in response to no product being detected passing a preset detection position within a second preset duration of the vibration, increasing a vibration frequency of the vibrating member.
